# EUROPÄISCHE PATENTANMELDUNG

(11) **EP 2 790 074 A1**
(43) Veröffentlichungstag der Anmeldung: **15.10.2014**
(21) Anmeldenummer: 14001121.4
(22) Anmeldetag: 26.03.2014
(51) Int. Cl.: G05B 19/042, G01S 1/68

(54) **Anordnung zur physischen Lokalisierung von Feldeinrichtungen in verfahrenstechnischen Anlagen**

(30) Priorität: 11.04.2013 DE 202013003415 U
(71) Anmelder: ABB Technology AG, 8050 Zürich (CH)
(72) Erfinder: Braun, Roland, 53859 Niederkassel Lülsdorf (DE); Kaiser, Alexander, 68542 Heddesheim (DE)
(74) Vertreter: Marks, Frank

(57) **Zusammenfassung**

Die Erfindung betrifft eine Anordnung zur physischen Lokalisierung von Feldeinrichtungen in verfahrenstechnischen Anlagen, in der jede Feldeinrichtung eindeutig identifizierbar und hinsichtlich ihres Installationsortes in der verfahrenstechnischen Anlage bekannt ist. Zum Ansteuern und Auffinden einer Feldeinrichtung in kürzest möglicher Zeit wird eine mobile Einrichtung (10) mit mindestens einem Speicher (15) und einer grafischen Anzeigeeinrichtung (16) vorgeschlagen, wobei in dem Speicher (15) zu den instanziierten Daten (11) der jeweiligen Feldeinrichtung mindestens eine bildliche Darstellung (12) der Feldeinrichtung und eine topologische Koordinatenangabe (13) des Installationsortes der jeweiligen Feldeinrichtung zugeordnet und abrufbar abgelegt sind.

## Beschreibung

Die Erfindung betrifft eine Anordnung zur physischen Lokalisierung von Feldeinrichtungen in verfahrenstechnischen Anlagen gemäß dem Oberbegriff des Patentanspruchs 1.

In komplexen und / oder räumlich ausgedehnten verfahrenstechnischen Anlagen sind eine Vielzahl von Feldgeräten zur Steuerung des technischen Prozesses in der verfahrenstechnischen Anlage installiert. Dazu gehören Messwertaufnehmer für physikalische Größen wie Druck, Temperatur, Durchflussmenge, Konzentration und dergleichen sowie Stellglieder, sogenannte Aktuatoren, zur Betätigung von Ventilen, Klappen, Fördermittel und dergleichen.

Im Fall einer Störung oder Havarie ist es erforderlich, in kürzester Zeit das gestörte Feldgerät zu identifizieren und zu lokalisieren, um vor Ort die Reparatur beziehungsweise den Austausch des gestörten Feldgeräts vornehmen zu können.

Alle Feldgeräte einer verfahrenstechnischen Anlage sind in eine hierarchische Struktur von Regeleinrichtungen umfassenden Regelkreisen eingebunden. Die Regeleinrichtungen sind dabei in einer auf die verfahrenstechnische Anlage abgestimmten steuerungstechnischen Anlage zusammengefasst. Die steuerungstechnische Anlage kann dabei zentral oder dezentral aufgebaut sein. Unabhängig davon ist jedes Feldgerät in einer gegebenen verfahrenstechnischen Anlage über die Mittel der steuerungstechnischen Anlage eindeutig identifizierbar und logisch einem Anlagenteil zuordenbar. Die damit einhergehende logische Lokalisierung jedes Feldgeräts ist jedoch unzureichend, um ein gestörtes Feldgerät in der verfahrenstechnischen Anlage vor Ort auch tatsächlich in angemessener Zeit aufzufinden.

Darüber hinaus sind Kennzeichnungssysteme, beispielsweise nach DIN 6779, bekannt, nach denen jedes Feldgerät in einer gegebenen verfahrenstechnischen Anlage nach dem Einbauort gekennzeichnet ist. Das Auffinden eines gesuchten Feldgeräts setzt jedoch detaillierte Kenntnisse über den Aufbau der verfahrenstechnischen Anlage voraus. Darüber hinaus ist nicht gewährleistet, dass immer eine standardisierte Namenskonvention verwendet wird. Das bedeutet, dass das Wartungspersonal viele verschiedene kundenspezifische Kennzeichnungssysteme beherrschen muss.

Ein weiteres Problem ergibt sich aus der Tatsache, dass die Personen für die Wartung einer Anlage verschieden von denen sind, die die Installation gebaut haben. Fluktuierendes Wartungspersonals benötigt zunächst eine gewisse Art von Training für alle möglichen Installationen. Service-Mitarbeiter sind nicht nur auf eine bestimmte Anlage zugewiesen.

Aus der DE 101 24 266 A1 ist ein System zur physischen Lokalisierung von Feldgeräten in verfahrenstechnischen Anlagen bekannt, in der jedes Feldgerät eindeutig identifizierbar und über ein Kommunikationsnetzwerk mit einer steuerungstechnischen Anlage verbunden ist und die eine lokal orientierte hierarchische Struktur sowie eine darauf gerichtete Anlagenkennzeichnung aufweist. Dabei sind eine ortsfeste Einrichtung und eine mobile Einrichtung vorgesehen, wobei die ortsfeste Einrichtung dem Feldgerät zugeordnet ist. In einem nichtflüchtigen Speicher der ortsfesten Einrichtung sind detaillierte Angaben zur Position des Installationsorts des Feldgeräts abrufbar hinterlegt. Die mobile Einrichtung ist mit einer Verarbeitungseinheit, einer Tastatur, einer Anzeigeeinheit und eine Kommunikationseinrichtung zur drahtlosen Kommunikation ausgestattet. Abgerufene Angaben zur Position des Installationsorts des Feldgeräts in der verfahrenstechnischen Anlage sind mit der Anzeigeeinheit visualisierbar.

Der Erfindung liegt daher die Aufgabe zugrunde, Mittel anzugeben, die es gestatten, eine Feldeinrichtung in der verfahrenstechnischen Anlage zielgerichtet in kürzest möglicher Zeit anzusteuern und auffinden zu können.

Erfindungsgemäß wird diese Aufgabe mit den Mitteln des Patentanspruchs 1 gelöst. Vorteilhafte Ausgestaltungen der Erfindung sind in den rückbezogenen Ansprüchen genannt.

Die Erfindung geht von einer verfahrenstechnischen Anlage aus, in der jede Feldeinrichtung eindeutig identifizierbar und hinsichtlich ihres Installationsortes in der verfahrenstechnischen Anlage bekannt ist. Als Feldeinrichtung im Sinne der vorliegenden Erfindung werden neben Feldgeräten der Prozessautomation auch Infrastruktureinrichtungen wie Switches, Energieverteiler, Schaltkästen und dergleichen verstanden.

Das Wesen der Erfindung besteht in einer mobilen Einrichtung mit mindestens einem Speicher und einer grafischen Anzeigeeinrichtung, wobei in dem Speicher zu den instanzüerten Daten der jeweiligen Feldeinrichtung mindestens eine bildliche Darstellung der Feldeinrichtung und eine topologische Koordinatenangabe des Installationsortes der jeweiligen Feldeinrichtung zugeordnet und abrufbar abgelegt sind.

Vorteilhafterweise wird mit dieser visuellen Unterstützung des Wartungspersonals das Auffinden der gesuchten Feldeinrichtung in einer verfahrenstechnischen Anlage erleichtert.

Nach einem weiteren Merkmal der Erfindung ist die topologische Koordinatenangabe des Installationsortes in eine Umgebungskarte eingebettet, auf der weitere Objekte des Installationsortes verzeichnet sind.

Vorteilhafterweise ist die gesuchte Feldeinrichtung im Kontext umgebender Infrastrukturmerkmale leichter auffindbar. Dazu können neben weiteren Feldeinrichtungen auch Wege, Kabelführungen, Rohrleitungen, Maschinen und dergleichen gehören.

Nach einem weiteren Merkmal der Erfindung ist die topologische Koordinatenangabe des Installationsortes um eine Höhenangabe ergänzt.

Vorteilhafterweise ist die gesuchte Feldeinrichtung insbesondere dann leichter auffindbar, wenn ihr Installationsort außerhalb des Sichtfeldes des sich bewegenden Wartungspersonals ist.

Nach einem weiteren Merkmal der Erfindung weist die mobile Einrichtung Mittel zur Bestimmung der eigenen Position auf.

Vorteilhafterweise ist die gesuchte Feldeinrichtung durch den örtlichen Bezug zur Position des Wartungspersonals leichter auffindbar.

Nach einem weiteren Merkmal der Erfindung ist die eigene Position in der Umgebungskarte des Installationsortes der gesuchten Feldeinrichtung verzeichnet.

Vorteilhafterweise ist die gesuchte Feldeinrichtung durch den den örtlichen Bezug zur Position des Wartungspersonals im Kontext umgebender Infrastrukturmerkmale leichter auffindbar.

Die erfindungsgemäße Anordnung kann in ein Geräteverwaltungssystem eingebettet sein. Dadurch wird eine höhere Akzeptanz beim Wartungspersonal erreicht. Darüber hinaus ist die erfindungsgemäße Anordnung geeignet, die Wartungskosten zu senken, da sowohl der Vorbereitungsaufwand als auch das tatsächliche Auffinden einer gesuchten Feldeinrichtung vermindert wird.

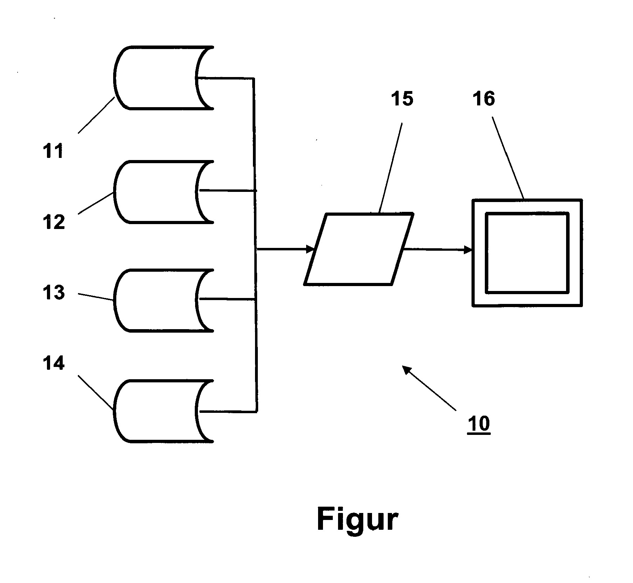

Die Erfindung wird nachstehend anhand eines Ausführungsbeispiels näher erläutert. In der einzigen Figur ist eine mobile Einrichtung **10** zum Auffinden von Feldeinrichtungen in einer verfahrenstechnischen Anlage prinzipiell dargestellt.

Die mobile Einrichtung **10** weist mindestens einen Speicher **15** und eine grafische Anzeigeeinrichtung **16** auf. In dem Speicher **15** sind zu den instanziierten Daten **11** der jeweiligen Feldeinrichtung mindestens eine bildliche Darstellung **12** der Feldeinrichtung und eine topologische Koordinatenangabe **13** des Installationsortes der jeweiligen Feldeinrichtung zugeordnet und abrufbar zur Anzeige auf der Anzeigeeinrichtung **16** abgelegt. Dabei kann vorgesehen sein, zur bildlichen Darstellung **12** ein Foto der Feldeinrichtung einzubinden.

In weiterer Ausgestaltung der Erfindung ist die topologische Koordinatenangabe **13** des Installationsortes in eine Umgebungskarte **14** eingebettet, auf der weitere Objekte des Installationsortes verzeichnet sind. Als weitere Objekte können Wege, Kabelführungen, Rohrleitungen, Maschinen und dergleichen vorgesehen sein. Dabei kann die Umgebungskarte **14** als Grundriss der verfahrenstechnischen Anlage oder eines Teils davon ausgebildet sein.

In weiterer Ausgestaltung der Erfindung ist die topologische Koordinatenangabe **13** des Installationsortes um eine Höhenangabe ergänzt.

In weiterer Ausgestaltung der Erfindung weist die mobile Einrichtung **10** Mittel zur Bestimmung der eigenen Position auf. Im Einzelnen kann die mobile Einrichtung **10** mit einem GPS-Empfänger ausgestattet sein.

In weiterer Ausgestaltung der Erfindung ist die eigene Position der mobilen Einrichtung **10** in der Umgebungskarte **14** des Installationsortes der gesuchten Feldeinrichtung verzeichnet.

### Bezugszeichenliste

- 10: mobile Einrichtung
- 11: instanziierten Daten
- 12: bildliche Darstellung
- 13: topologische Koordinatenangabe
- 14: Umgebungskarte
- 15: Speicher
- 16: Anzeigeeinrichtung

## Patentansprüche

1. Anordnung zur physischen Lokalisierung von Feldeinrichtungen in verfahrenstechnischen Anlagen, in der jede Feldeinrichtung eindeutig identifizierbar und hinsichtlich ihres Installationsortes in der verfahrenstechnischen Anlage bekannt ist,
**dadurch gekennzeichnet,**
**dass** eine mobile Einrichtung (10) mit mindestens einem Speicher (15) und einer grafischen Anzeigeeinrichtung (16) vorgesehen ist, wobei in dem Speicher (15) zu den instanziierten Daten (11) der jeweiligen Feldeinrichtung mindestens eine bildliche Darstellung (12) der Feldeinrichtung und eine topologische Koordinatenangabe (13) des Installationsortes der jeweiligen Feldeinrichtung zugeordnet und abrufbar abgelegt sind.

2. Anordnung nach Anspruch 1
**dadurch gekennzeichnet,**
**dass** die topologische Koordinatenangabe (13) des Installationsortes in eine Umgebungskarte (14) eingebettet ist, auf der weitere Objekte des Installationsortes verzeichnet sind.

3. Anordnung nach einem der Ansprüche 1 und 2
**dadurch gekennzeichnet,**
**dass** die topologische Koordinatenangabe (13) des Installationsortes um eine Höhenangabe ergänzt ist.

4. Anordnung nach Anspruch 1
**dadurch gekennzeichnet,**
**dass** die mobile Einrichtung (10) Mittel zur Bestimmung der eigenen Position aufweist.

5. Anordnung nach Anspruch 4
**dadurch gekennzeichnet,**
**dass** die eigene Position in der Umgebungskarte (14) des Installationsortes der gesuchten Feldeinrichtung verzeichnet ist.
